# EUROPEAN PATENT APPLICATION

(11) **EP 2 747 253 A1**
(43) Date of publication of application: **25.06.2014**
(21) Application number: 12199000.6
(22) Date of filing: 21.12.2012
(51) Int. Cl.: H02K 9/12

(54) **Arrangement for cooling a turbo generator and a method therefore**

(71) Applicant: Siemens Aktiengesellschaft, 80333 München (DE)
(72) Inventor: The designation of the inventor has not yet been filed

(57) **Abstract**

An arrangement for cooling a turbo generator (10) is presented. The arrangement includes a cooler (20) for cooling a primary coolant (22), wherein the primary coolant (22) cools one or more components of the generator (10), and a refrigeration unit (40) connected to the cooler (20) for providing a refrigerant for cooling the primary coolant (22).

## Description

The present invention relates to a turbo generator and more particularly to an arrangement for cooling a turbo generator.

Power generation plants produce electricity by converting energy (e.g. fossil fuel, nuclear fusion, hydraulic head and geothermal heat) into mechanical energy (e.g. rotation of a turbine shaft), and then converting the mechanical energy into electrical energy (e.g. by the principles of electromagnetic induction). Some of these power generation plants, such as a fossil fuel power generation plant, comprise a turbine, a generator and an exciter. The turbine, generator and exciter are typically coupled to each other in axial alignment, with the generator located between the turbine and the exciter.

The turbo generator includes a shaft that is rotatably supported in housing and connects the turbine and the exciter. The turbine expands a pressurized air which enables it to achieve a low temperature to provide cooling. Shaft of the turbine is rotated by the compressed air which in turns drives the exciter. Rotation of the generator rotor generates a magnetic field in windings of a stator thereby producing electrical power.

During operation, components of the turbo generator are heated up and are cooled using air as in case of air cooled turbo generator or using hydrogen as a coolant as in hydrogen-cooled turbo generators.

In hydrogen-cooled turbo generators, hydrogen is passed through a cooler and supplied to the various components in a closed loop. The hydrogen which passes the cooler is cooled using water stored in cooling towers or from a reservoir.

However, water is unable to cool the hydrogen to a temperature less than the ambient temperature.

It is therefore an object of the present invention to provide a cooling arrangement for the turbo generator which will enable enhanced cooling.

The object is achieved by providing an arrangement for cooling a turbo generator according to claim 1 and a method for cooling the turbo generator according to claim 6.

According to the invention, an arrangement for cooling a turbo generator is provided. The arrangement includes a cooler for cooling a primary coolant, wherein the primary coolant cools one or more components of the generator, and a refrigeration unit connected to the cooler for providing a refrigerant for cooling the primary coolant. By using a refrigerant the primary coolant is cooled to a lower temperature thereby aiding in further cooling of the components of the turbo generator thereby increasing the efficiency.

In one embodiment, the refrigerant is R134a. R134a is a high temperature refrigerant, capable of reducing the temperature of primary coolant to about 20 degree Celsius. Additionally, R134a is environment friendly with less ozone depletion potential as compared to other refrigerants.

In another embodiment, the refrigerant is R-717. R-717 can be liquefied easily by compression or cooling and when returned to its gaseous state, it absorbs large amounts of heat from its surroundings, thereby reducing the temperature of the primary coolant.

In one embodiment, the cooler includes an opening for directing the primary coolant into the turbo generator. The primary coolant stored in the cooler is directed to the components of the generator for absorbing heat.

In one embodiment, the primary coolant is hydrogen. Hydrogen has a high thermal conductivity as compared to other gases, high specific heat capacity, low density and low viscosity. Hydrogen is advantageously used in rotary machines which have windage losses.

According to another aspect of the invention, a method for cooling a turbo generator is presented. The method includes directing a primary coolant into the turbo generator for cooling one or more components, and providing a refrigerant to cool the primary coolant from a refrigeration unit, wherein the refrigeration unit is connected to a cooler having the primary coolant. Use of refrigerant enables lowering of primary coolant temperature to about 20 degree centigrade providing efficient cooling of the generator components.

In one embodiment, the primary coolant after extracting heat from the one or more components of the turbo generator is directed into the cooler through a second opening. Such an arrangement enables a closed loop which enables reuse of the primary coolant in the generator, wherein the primary coolant is directed from the cooler through an opening in the generator and from the generator into the cooler through the second opening.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
- FIG 1: is a cutaway side elevation view of a generator;

- FIG 2: is a schematic diagram depicting an exemplary cooling arrangement for the generator;
- FIG 3: is a flow diagram depicting an exemplary method for cooling the turbo generator, in accordance with aspects of the present technique.
Embodiments of the present invention relate to an electrical machine, such as a turbo generator. More particularly, the embodiments of the present invention relate to an arrangement for cooling the turbo generator, such as a hydrogen-cooled turbo generator.

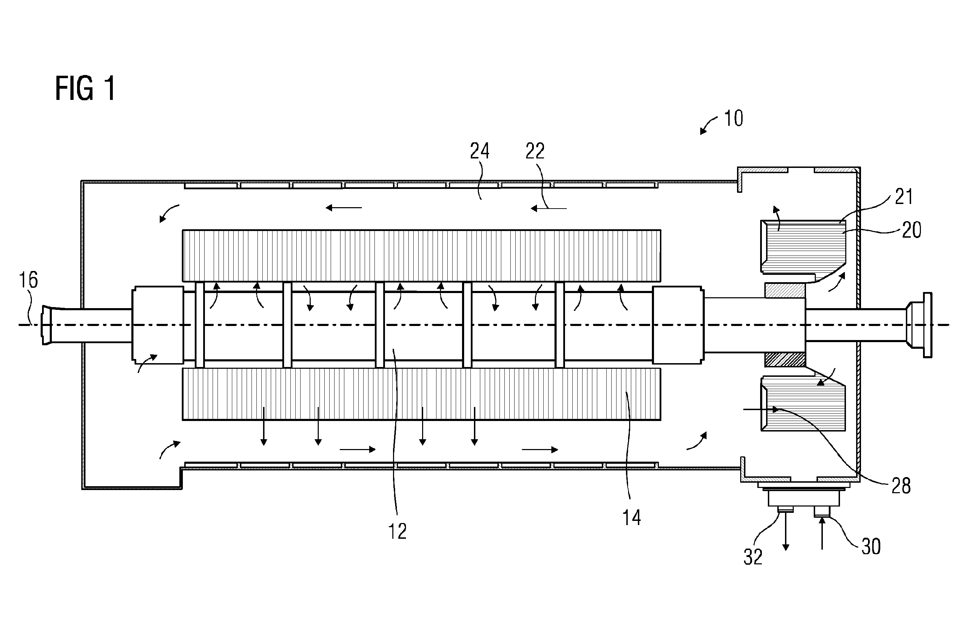

FIG 1 is a diagram depicting a cutaway side elevation view of a generator 10, which is coupled in axial alignment between a turbine (not shown) and an exciter (not shown). The exciter provides an electrical current to the generator rotor 12. The current is typically a direct current.

The generator 10 includes a stator 14 and a rotor body 12 supported concentrically about an axis of rotation 16. The rotor 12 includes excitation windings arranged in slots on the inside or the outside. The generator 10 includes a cooling supply or a cooler 20 for cooling one or more components of the generator 10.

The cooling is achieved by a coolant 22, which is hydrogen in the present configuration. The coolant 22 is circulated inside the generator 10 through a plurality of passages 24 therein.

The coolant 22, which is a primary coolant, is passed through the cooler 20 after being supplied to one or more components of the generator 10. The cooler 20 directs the coolant 22 into the generator 10 through an opening in the generator 10. The coolant 22 flows through the passages 24 in the generator 10 and is circulated back into the cooler 20 through a second opening 28.

The primary coolant 22 absorbs heat from the one or more components of the generator 10 and thus in turn gets heated up. Hence, to cool the primary coolant 22 the cooler 20 includes an inlet 30 for allowing a secondary coolant to enter the cooler 20 and cool the primary coolant 22.

The cooler 20 includes a plurality of tubes 21 in which the secondary coolant is circulated. When the heated primary coolant 22 comes in contact with the tubes 21, the tubes get heated up. The secondary coolant circulating in the tubes 21 extracts heat from the tubes 21 thereby aiding in the cooling of primary coolant 22.

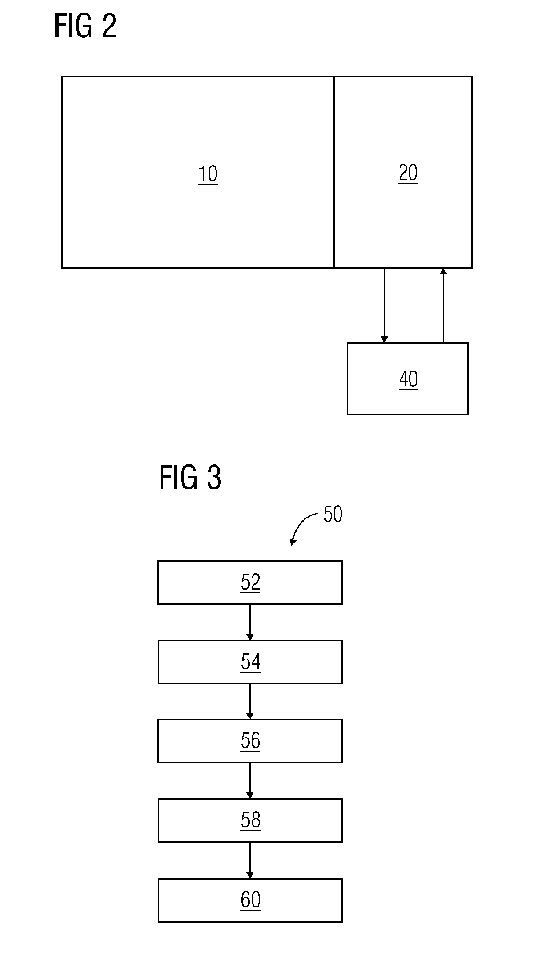

Referring now to FIG 2, a schematic diagram depicting the cooling arrangement is presented. The arrangement includes a refrigeration unit 40 connected to the generator 10 and more particularly to the cooler 20 for supplying a secondary coolant to the cooler 20.

The secondary coolant is a refrigerant, such as R134a, R-717 and so forth.

The refrigerant is supplied to the cooler 20 via a duct, the duct directing the refrigerant through the inlet 30 in the cooler 20.

As previously noted, the cooler 20 includes the plurality of tubes 21 including fins, the refrigerant circulates in the tubes 21 after passing through the inlet 30, the refrigerant cools the tubes 21 which in turn aid in cooling the primary coolant 22. Refrigerant is directed back into the refrigeration unit 40 through an outlet 32 in the cooler 20.

In accordance with aspects of the present technique, tubes 21 in the cooler 20 are made of highly conducting material such as but not limited to Aluminum or Copper.

FIG 3 is a flow diagram depicting an exemplary method 50 for cooling the turbo generator, such as the generator 10 of FIG 1.

The method 50 includes directing the primary coolant, such as hydrogen through an opening in the turbo generator for cooling one or more components, as at step 52. The components include the rotor shaft, the stator, the coils and so forth.

During operation, the components of the generator get heated, in order to maximize the efficiency these components are required to be cooled. The primary coolant when passed over the components cools the components thereby increasing the life of the generator components and increasing the efficiency.

At step 54, the coolant, which is hot, is directed back into the cooler through a second opening 28 in the cooler.

A secondary coolant, which is a refrigerant, such as R134a in the present invention, is provided by a refrigeration unit connected to the cooler for cooling the primary coolant, as at step 56.

The refrigerant is supplied through a duct and enters the cooler through an inlet 30, wherein it is circulated in a plurality of tubes 21 thereby cooling the tubes 21, as at step 58. The primary coolant on coming into contact with the tubes 21 is cooled to a temperature of about 20 degree centigrade.

At step 60, the refrigerant is directed back into the refrigeration unit through an outlet in the cooler.

The invention as described hereinabove has several advantages, such as lowering the temperature of the primary coolant or hydrogen to about 20 degree centigrade, which in turn aids in enhanced cooling of the generator components, thereby increasing the efficiency of the generator.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. An arrangement for cooling a turbo generator (10), comprising:
- a cooler (20) for cooling a primary coolant (22), wherein the primary coolant (22) cools one or more components of the generator (10), and
- a refrigeration unit (40) connected to the cooler (20) for providing a refrigerant for cooling the primary coolant (22).

2. The arrangement for cooling a turbo generator (10) according to claim 1,
wherein the refrigerant is R134a.

3. The arrangement for cooling a turbo generator (10) according to claim 1,
wherein the refrigerant is R-717.

4. The arrangement for cooling a turbo generator (10) according to any of the claims 1 to 3,
wherein the generator (10) comprises an opening for allowing the primary coolant (22) into the generator (10).

5. The arrangement for cooling a turbo generator (10) according to any of the claims 1 to 4,
wherein the primary coolant (22) is hydrogen.

6. A method (50) for cooling a turbo generator comprising:
- directing (52) a primary coolant into the turbo generator for cooling one or more components,
- providing (56) a refrigerant to cool the primary coolant from a refrigeration unit, wherein the refrigeration unit is connected to a cooler having the primary coolant.

7. The method (50) according to claim 6,
wherein the primary coolant (22) after extracting heat from the one or more components of the turbo generator is directed into the cooler through a second opening (28).

8. The method (50) according to claim 6 and 7,
further comprising directing the refrigerant into the cooler through a duct.

9. The method (50) according to any of the claims 6 to 8, wherein the refrigerant is R134a.

10. The method (50) according to any of the claims 6 to 9, wherein the primary coolant is hydrogen.
